# EUROPÄISCHE PATENTSCHRIFT

(11) **EP 1 244 035 B1**
(45) Veröffentlichungstag und Bekanntmachung des Hinweises auf die Patenterteilung: **04.06.2008**
(21) Anmeldenummer: 01107313.7
(22) Anmeldetag: 23.03.2001
(51) Int. Cl.: G06F 17/40, G01D 9/00

(54) **Verfahren zum Bedienen eines Feldgerätes**
Method for operating a measuring device
Procédé de commande d'un dispositif de mesure

(43) Veröffentlichungstag der Anmeldung: 25.09.2002
(73) Patentinhaber: Endress + Hauser Process Solutions AG, 4153 Reinach BL (CH)
(72) Erfinder: Maneval, Michael, 79650 Schopfheim (DE)
(74) Vertreter: Andres, Angelika Maria

(56) Entgegenhaltungen:
- EP-A- 0 992 923
- WO-A-91/00570

## Beschreibung

Die Erfindung bezieht sich auf ein Verfahren zum Bedienen eines Feldgerätes.

In der Automatisierungstechnik werden häufig Feldgeräte eingesetzt, die zur Erfassung und/oder Beeinflussung von Prozeßvariablen dienen. Beispiele für derartige Feldgeräte sind Füllstandsmessgeräte, Massedurchflußmesser, Druckmesser, Temperaturmesser etc., die die entsprechenden Prozeßvariablen Füllstand, Massedurchfluß, Druck bzw. Temperatur erfassen. Zur Beeinflussung von Prozeßvariablen dienen sogenannte Aktoren, die z.B. als Ventile den Durchfluß einer Flüssigkeit in einem Rohrleitungsabschnitt beeinflussen.

Die Feldgeräte sind in der Regel mit einem zentralen Leit- bzw. Engineeringsystem verbunden, das den gesamten Prozeßablauf steuert bzw. einen direkten Zugriff auf die einzelnen Feldgeräte ermöglicht. Im Leitsystem werden die Meßwerte der verschiedenen Prozeßvariablen ausgewertet bzw. überwacht und die entsprechenden Aktoren zur Prozeßbeeinflussung entsprechend angesteuert.
Die Datenübertragung zwischen Feldgerät und Leitsystem erfolgt nach den bekannten internationalen Standards für Feldbusse, wie z. B. Hart, Foundation Fieldbus, Profibus, CAN etc.
Die heutigen Automatisierungsanlagen bestehen häufig aus einer Vielzahl von unterschiedlichen Feldgeräten der unterschiedlichsten Hersteller.
Vor der Inbetriebnahme bzw. auch während des Betriebs müssen Einstellungen an den Feldgeräten erfolgen. Diese Einstellungen müssen häufig vor Ort erfolgen. Hierfür stellen die einzelnen Feldgerätehersteller jeweils unterschiedliche Konfigurationsprogramme zur Verfügung.

Die Beherrschung der unterschiedlichen Programme einschließlich der unterschiedlichen Bedienphilosophien ist für den Anwender äußerst aufwendig und zeitraubend.
Die Parametrierung einzelner Feldgeräte oder die Konfigurierung bestimmter Feldgerätegruppen ist in einer Automatisierungsanlage mit einer Vielzahl von Feldgeräten aufgrund der verschiedenen Kommunikationsschnittstellen und der benötigten Protokolle äußerst aufwendig und teuer.
Die Konfigurierung, der Betrieb und die Wartung eines Feldgerätes in einer Automatisierungsanlage sollte erheblich einfacher möglich sein.
Angestrebt ist ein Plug and Play für Feldgeräte.

Verschiedene Feldgerätehersteller haben sich deshalb in der PROFIBUS Nutzerorganisation e.V. zusammengeschlossen um eine einfachere Handhabung der Feldgeräte zu ermöglichen. Der Feldgerätehersteller entwickelt zu jedem seiner Feldgeräte ein spezielles Softwaremodul, das zusammen mit dem Feldgerät an den Kunden ausgeliefert wird. Dieses Softwaremodul kapselt alle Daten und Funktionen des jeweiligen Feldgerätes. Das Feldgerät stellt im Prinzip eine Black-Box dar, so daß firmeninternes Know-how dem Zugriff von Dritten verborgen bleibt. Zusätzlich kann der Gerätehersteller noch mit diesem Softwaremodul sein eigenes Erscheinungsbild mitliefern. D.h. die Bedienoberfläche des Feldgerätes sieht für den Anwender immer gleich aus unabhängig von der Laufzeitumgebung. Das Anwendungsprogramm, das zur Konfigurierung, zum Betrieb und zur Wartung verschiedener Feldgeräte dient, greift über eine definierte Schnittstelle auf das jeweilige Feldgerätesoftwaremodul zu.
Eine Möglichkeit der Schnittstellenspezifikation ist in Profibus Guideline - Order No. 2.162 Stand November 2000, zu beziehen über die PROFIBUS-Nutzerorganisation e.V., Karlsruhe (www.profibus.com), angegeben, auf deren Inhalt speziell verwiesen wird.

Jeder Feldgerätehersteller liefert mit seinem Feldgerät bestimmte Softwaremodule, die die Standardfunktionalitäten eines Feldgerätes repräsentieren, aus.

Neben diesen Standardfunktionalitäten sind aber noch Erweiterungsfunktionalitäten seitens der Anwender erwünscht. Insbesondere im Bereich vorausschauende Wartung, in der Anlagendokumentation usw.

Diese Funktionalitäten können mit dem üblichen Anwendungsprogramm nicht aufgerufen werden.

Aus dem Dokument WO 91/00 570 A bzw. EP-A-0 992 923 sind Datenerfassungssysteme bekannt, bei denen Software-bzw. Hardwarekomponenten zusammenwirken. Erweiterungsfunkstionalitäten können mit diesen Systemen nur aufwendig realisiert werden.

Der Erfindung liegt die Aufgabe zugrunde, ein Verfahren zum Bedienen eines Feldgerätes vorzuschlagen, das neben den üblichen Standardfunktionalitäten auch für Erweiterungsfunktionalitäten geeignet ist.

Gelöst wird diese Aufgabe durch ein Verfahren zum Bedienen eines Feldgerätes, bei dem ein Anwendungsprogramm über definierte Schnittstellen mit einem feldgerätespezifischen Softwaremodul kommuniziert, um Standardfunktionalitäten des Feldgerätes aufzurufen,
wobei ein Erweiterungsmodul für das Anwendungsprogramm vorgesehen ist, das zwischen Anwendungsprogramm und feldgerätespezifischen Softwaremodul zwischengeschaltet ist, um zusätzliche Funktionalitäten im Kontext und unter Zuhilfenahme des feldgerätespezifischen Softwaremoduls zu ermöglichen.

Dadurch können zusätzliche Funktionalitäten der Feldgeräte in einfacher Weise in Anwendungsprogramme integriert werden.

Vorteilhafte Weiterentwicklungen der Erfindung sind in den Unteransprüchen angegeben.

So ist bei einer Weiterentwicklung als zusätzliche Funktionalität vorausschauende Wartung bzw. Anlagendokumentation vorgesehen.

In einer weiteren Weiterentwicklung werden Daten, die Erweiterungsfunktionalitäten betreffen, zusätzlich in einer separaten Datenbank abgespeichert.

In einer weiteren Weiterentwicklung ist das Erweiterungsmodul anwendungsprogrammunabhängig.

In einer weiteren Weiterentwicklung läuft das Anwendungsprogramm auf einer Microsoft ™ oder UNIX ™ Plattform.

In einer weiteren Weiterentwicklung sind mehrere Softwaremodule vorgesehen.

Die Erfindung wird anhand der nachfolgenden Zeichnungen näher erläutert. Es zeigt:
- Fig. 1:: Prinzipdarstellung einer Automatisierungsanlage
- Fig. 2:: Prinzipdarstellung der Softwarearchitektur nach dem Stand der Technik
- Fig. 3:: Prinzipdarstellung der erfindungsgemäßen Softwarearchitektur

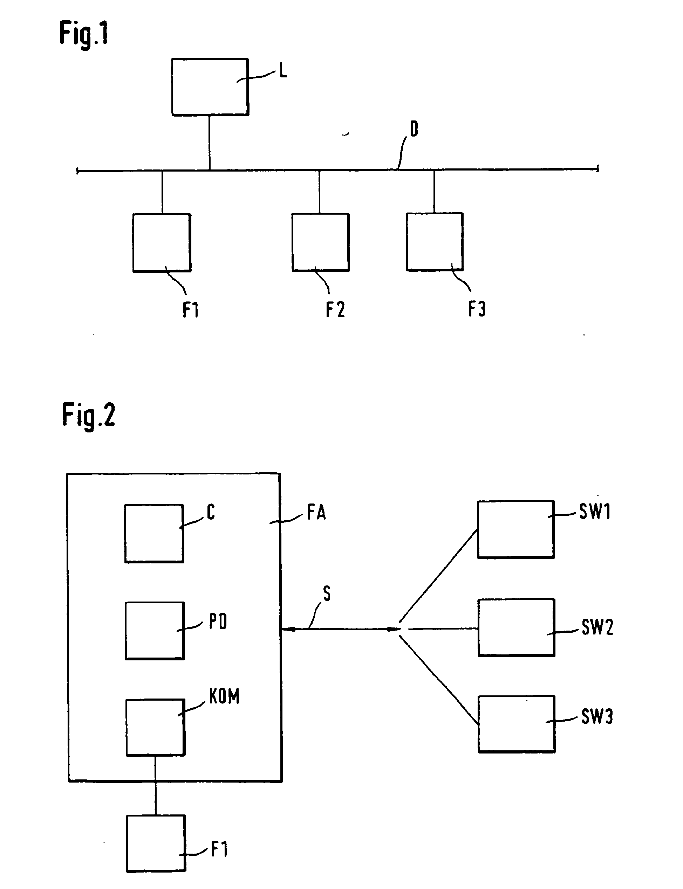

In Fig. 1 ist eine Prinzipdarstellung einer Automatisierungsanlage dargestellt. Ein Leitsystem L ist über einen Datenbus D mit mehreren Feldgeräten F1, F2, F3 etc. verbunden. Bei den Feldgeräten F1-F3 kann es sich z.B. um Druckmesser, Temperaturmesser oder Durchflußmesser etc. handeln.
Das Leitsystem L kommuniziert über den Datenbus D mit dem jeweiligen Feldgerät z.B. F1. So können Meßwerte oder die Parameter des Feldgerätes vom Feldgerät F1 ans Leitsystem L übertragen werden. Gleichzeitig kann die Parametrierung des Feldgerätes F1 vom Leitsystem L aus erfolgen.
Die Datenkommunikation auf dem Datenbus D erfolgt nach den entsprechenden internationalen Standards wie z. B. Profibus, CAN oder FF.

In Fig. 2 ist eine Prinzipdarstellung der Softwarearchitektur dargestellt.

Die Softwarearchitektur bildet im Prinzip die Automatisierungsanlage gemäß Fig.1 nach. Dem Leitsystem L entspricht das Anwendungsprogramm FA (frame application). Das Anwendungsprogramm FA besteht aus einer Client-Anwendung C einem Projektdatenspeicher PD und einem Kommunikationsmodul KOM.
Das Anwendungsprogramm FA kommuniziert über eine definierte Schnittstelle S mit feldgerätespezifischen Softwaremodulen SW1, SW2, SW3 etc.

Benötigt die Client-Anwendung C Angaben zu bestimmten Standardfunktionsmodule, so greift sie über die Schnittstelle S auf das entsprechende Softwaremodul des Feldgerätes z. B. F1 zu.

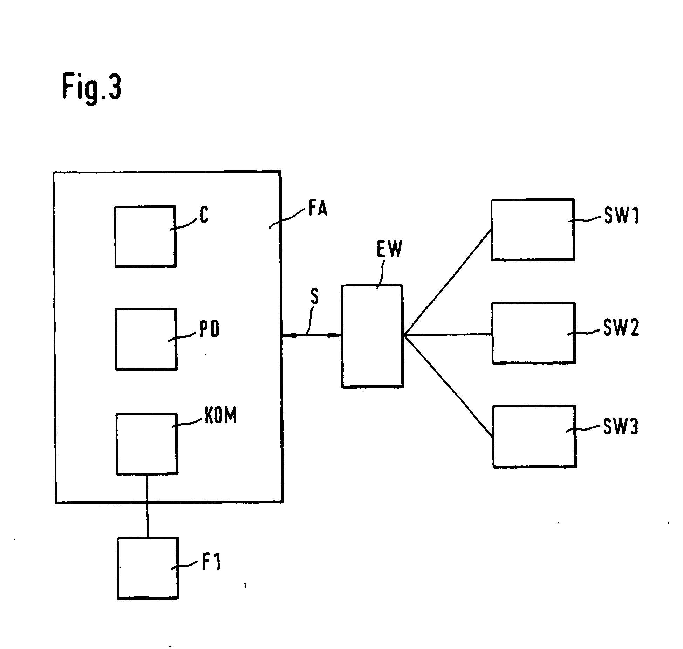

Fig. 3 entspricht im wesentlichen Fig. 2 mit der Ausnahme, daß zwischen Anwendungsprogramm FA und Softwaremodule ein Erweiterungsmodul EW geschaltet ist.
Erfindungsgemäß erfolgt die gesamte Kommunikation mit den Softwaremodulen SW1, SW2, SW3 über das Erweiterungsmodul EW. Standardfunktionen die ein bestimmtes Feldgerät betreffen werden durch das Erweiterungsmodul nicht beeinflußt.
Erweiterungsfunktionalitäten werden vom Erweiterungsmodul EW erkannt und speziell verarbeitet.

Somit können auch firmenspezifische Funktionalitäten für Feldgeräte über das Anwendungsprogramm FA aufgerufen werden.
Zu den firmenspezifischen Funktionalitäten zählen z. B. die vorausschauende Wartung und die Anlagendokumentation.

Über das Erweiterungsmodul hat der Anwender die Möglichkeit, bestimmte firmenspezifische Funktionalitäten für die einzelnen Feldgeräte zu nutzen. Hierfür müssen diese Funktionalitäten vom Feldgerätehersteller freigeschaltet werden. In einfacher Weise kann der Feldgerätehersteller zusätzliche Funktionalitäten dem Anwender zur Verfügung stellen. Dies kann kostenlos oder nach einer Lizenz erfolgen.

Da unterschiedliche Feldgerätehersteller jeweils eigene firmenspezifische Funktionalitäten anbieten und vermarkten, ist es sicher sinnvoll, daß mehrere Erweiterungsmodule zwischen Anwendungsprogramm und Softwaremodul zwischengeschaltet werden können.

Erweiterungsfunktionalitäten können z. B. die vorausschauende Wartung betreffen.

Erweiterungsfunktionalitäten können z. B. Anlagendokumentation betreffen.

In vorteilhafter Weise können Daten, die Erweiterungsfunktionalitäten betreffen, in einer separaten Datenbank abgespeichert werden.

In vorteilhafter Weise ist das Erweiterungsmodul anwendungsprogrammunabhängig. D.h. das Erweiterungsprogramm ist für unterschiedliche Anwendungsprogramme geeignet.

In einfacher Weise handelt es sich bei dem Anwendungsprogramm FA um eine Anwendung, die auf Microsoft oder UNIX Plattform läuft.

Die Programmierung kann komponentenabhängig oder objektorientiert erfolgen.

Bei COM/DCOM handelt es sich um eine Softwarekomponententechnologie die von Microsoft ™ entwickelt wurde und die weltweit eingesetzt wird. Diese Technologie erlaubt die Interoperabilität zwischen Softwarekomponenten unabhängig von der verwendeten Programmiersprache.
In vorteilhafter Weise basiert die Anwendung auf COM-Technologie.

Die entsprechende Komponententechnologie unter UNIX wäre CORBA.

### Bezugszeichenliste

Leitsystem L
Datenbus D
Feldgeräten F1, F2, F3 etc.
Anwendungsprogramm FA
Client-Anwendnung C
Projektdatenspeicher PD
Kommunikationsmodul K
Schnittstelle S
Softwaremodulen SW1, SW2, SW3
Erweiterungsmodul EW

## Patentansprüche

1. Verfahren zum Bedienen eines Feldgerätes (F), bei dem ein Anwendungsprogramm (FA) über eine definierte Schnittstelle (S) mit einem feldgerätespezifischen Softwaremodul (SW1, SW2, SW3) kommuniziert, um Standardfunktionalitäten des Feldgerätes F aufzurufen, **dadurch gekennzeichnet, daß** ein Erweiterungsmodul (EW) für das Anwendungsprogramm vorgesehen ist, das zwischen Anwendungsprogramm (FA) und feldgerätespezifischen Softwaremodul (SW1, SW2, SW3) zwischengeschaltet ist, um zusätzliche Funktionalitäten im Kontext und unter Zuhilfenahme des feldgerätespezifischen Softwaremoduls (SW1, SW2, SW3) zu ermöglichen.

2. Verfahren nach Anspruch 1, **dadurch gekennzeichnet, daß** als zusätzliche Funktionalität vorausschauende Wartung vorgesehen ist.

3. Verfahren nach Anspruch 1, **dadurch gekennzeichnet, daß** als zusätzliche Funktionalität Anlagendokumentation vorgesehen ist.

4. Verfahren nach einem der vorhergehenden Ansprüche, **dadurch gekennzeichnet, daß** die Daten die Erweiterungsfunktionalitäten betreffen in einer separaten Datenbank abgespeichert werden.

5. Verfahren nach einem der vorhergehenden Ansprüche, **dadurch gekennzeichnet, daß** das Erweiterungsmodul (EW) anwendungsprogrammunabhängig ist.

6. Verfahren nach einem der vorhergehenden Ansprüche, **dadurch gekennzeichnet, d**aß das Anwendungsprogramm (FA) auf einer Microsoft^{™} oder UNIX ^{™} Plattform läuft.

7. Verfahren nach einem der vorhergehenden Ansprüche, **dadurch gekennzeichnet, daß** mehrere Softwaremodule (SW1, SW2, SW3) vorgesehen sind.

## Claims

1. Process for operating a field device (F) where an application program (FA) communicates with a field device-specific software module (SW1, SW2, SW3) via a defined interface (S) to call up standard functions of the field device (F), **characterized in that** an extension module (EW) is provided for the application program and is connected in series between the application program (FA) and the field device-specific software module (SW1, SW2, SW3) to allow additional functions within the context of, and with the help of, the field device-specific software module (SW1, SW2, SW3).

2. Process as per Claim 1, **characterized in that** predictive maintenance is provided as an additional function.

3. Process per Claim 1, **characterized in that** system documentation is provided as an additional function.

4. Process as per one of the previous claims above, **characterized in that** the data affecting extended functions are saved in a separate database.

5. Process as per one of the previous claims above, **characterized in that** the extension module (EW) is independent of the application program.

6. Process as per one of the previous claims above, **characterized in that** the application program (FA) runs on a Microsoft^{™} or UNIX^{™} platform.

7. Process as per one of the previous claims above, **characterized in that** several software modules (SW1, SW2, SW3) are provided.

## Revendications

1. Procédé destiné à l'utilisation d'un appareil de terrain (F), pour lequel un programme d'application (FA) communique avec un module logiciel (SW1, SW2, SW3) spécifique à l'appareil de terrain, par le biais d'une interface (S) définie, afin d'appeler des fonctionnalités standard de l'appareil de terrain (F), **caractérisé en ce qu'**est prévu pour le programme d'application un module d'extension (EW), qui est inséré entre le programme d'application (FA) et le module logiciel (SW1, SW2, SW3) spécifique à l'appareil de terrain, afin d'obtenir l'accès à des fonctionnalités supplémentaires dans le contexte du / en recourant au module logiciel (SW1, SW2, SW3) spécifique à l'appareil de terrain.

2. Procédé selon la revendication 1, **caractérisé en ce qu'**une maintenance préventive est prévue en tant que fonctionnalité supplémentaire.

3. Procédé selon la revendication 1, **caractérisé en ce qu'**une documentation technique de l'installation est prévue en tant que fonctionnalité supplémentaire.

4. Procédé selon l'une des revendications précédentes, **caractérisé en ce que** les données, qui concernent les fonctionnalités d'extension, sont enregistrées dans une base de données séparée.

5. Procédé selon l'une des revendications précédentes, **caractérisé en ce que** le module d'extension (EW) est fonction du programme d'application.

6. Procédé selon l'une des revendications précédentes, **caractérisé en ce que** le programme d'application (FA) tourne sur une plate-forme Microsoft ^{™} ou UNIX ^{™}.

7. Procédé selon l'une des revendications précédentes, **caractérisé en ce que** sont prévus plusieurs modules (SW1, SW2, SW3).
